# EUROPEAN PATENT APPLICATION

(11) **EP 2 963 912 A1**
(43) Date of publication of application: **06.01.2016**
(21) Application number: 15172977.9
(22) Date of filing: 19.06.2015
(51) Int. Cl.: H04N 5/225, B60R 1/00, G03B 17/08

(54) **MOLDED CAMERA**

(30) Priority: 03.07.2014 US 201414323558
(71) Applicant: Delphi Technologies, Inc., Troy, MI 48007 (US)
(72) Inventor: PAN, Binghua, 760795 Singapore (SG); LOW, Yew Kwang, 738082 Singapore (SG); YONG, Sim Ying, 573975 Singapore (SG); ONG, Lay Boon, 570314 Singapore (SG); ZHANG, Zhiwu, 200129 Shanghai (CN)
(74) Representative: Delphi France SAS

(57) **Abstract**

ABSTRACT OF THE DISCLOSURE

A molded camera (30) suitable for use on a vehicle (12) to capture an image of a field-of-view (22) about the vehicle (12) includes a circuit board assembly (32), a pigtail connector (34), an imager device (36), a lens assembly (38), and a polymeric compound (40). The pigtail connector (34) is attached to the circuit board assembly (32). The imager device (36) is attached to the circuit board assembly (32). The lens assembly (38) is configured to focus the image of the field-of-view (22) about the vehicle (12) on the imager device (36). The polymeric compound (40) is configured to encapsulate the circuit board assembly (32), seal / protect the molded camera (30) and define an external portion (42) of an exterior surface (44) of the molded camera (30).

## Description

### TECHNICAL FIELD

This disclosure generally relates to camera suitable for use on a vehicle, and more particularly relates to a molded camera that has a portion of the exterior surface of the molded camera defined or determined by molding, preferably low pressure over-molding of components that make up the camera.

### BACKGROUND OF INVENTION

Cameras have been more and more widely used in automotive vehicles both inside and outside of car for various applications. Rear view cameras that allow an operator to observe a field-of-view behind a vehicle are well known and widely applied. These cameras help the operator to detect objects that are blocked from direct viewing by the rear portion of the vehicle, or are located in areas commonly known as blind spots. As the use of such cameras becomes more widespread, competition between suppliers urges those suppliers to simplify manufacturing processes, reduce manufacturing costs, and use fewer or/and less expensive parts, and thereby reduce the total cost of the camera.

### SUMMARY OF THE INVENTION

In accordance with one embodiment, a molded camera suitable for use on a vehicle to capture an image of a field-of-view about the vehicle is provided. The molded camera includes a circuit board assembly, a pigtail connector, an imager device, a lens assembly, and a polymeric compound. The pigtail connector is attached to the circuit board assembly. The imager device is attached to the circuit board assembly. The lens assembly is configured to focus the image of the field-of-view about the vehicle on the imager device. The polymeric compound is configured to encapsulate the circuit board assembly and define an external portion of an exterior surface of the molded camera.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a side view of an object behind a vehicle equipped with rear view camera in accordance with one embodiment;
Fig. 2 is an exploded view of a known camera assembly in accordance with one embodiment;
Fig. 3 is an exploded view of a molded camera suitable for use in the system of Fig. 1 in accordance with one embodiment;
Fig. 4 is a sectional top view of the molded camera of Fig. 3 in accordance with one embodiment;
Fig. 5 is a sectional top view of the molded camera of Fig. 3 in accordance with one embodiment; and
Figs. 6A, 6B, 6C, and 6D are sectional top views showing a progression of stages of building the molded camera of Fig. 3 in accordance with one embodiment.

### DESCRIPTION OF THE PREFERRED EMBODIMENTS

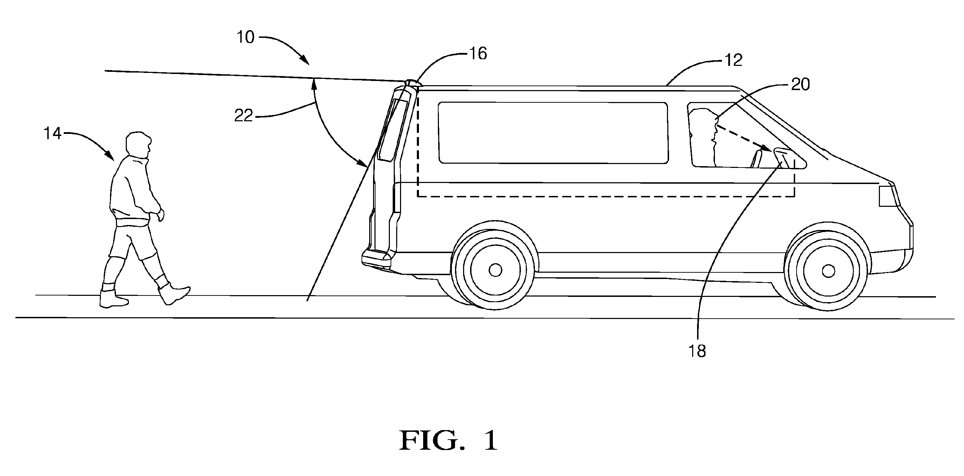

Fig. 1 illustrates a non-limiting example of a system 10 generally configured to provide an operator 20 of a vehicle 12 a notification that an object 14 is proximate to the vehicle 12. In this example, the object 14 is a child walking behind the vehicle 12. The system 10 is also useful to detect an adult, an animal, other vehicle, or any obstruction with which the vehicle 12 may collide. The system 10 includes a rearview camera 16. In general, the rearview camera 16 is mounted on the vehicle 12 in order to capture an image of a field-of-view 22 useful to detect objects that may not be readily seen by the operator 20. The system 10 also includes a display 18 for displaying to the operator 20 the image captured by the rearview camera 16. In this non-limiting example, the field-of-view 22 is directed behind the vehicle 12. However, it is contemplated that the system 10 could be configured to detect an object beside the vehicle 12 (e.g. a side view camera) or in front of the vehicle 12 (e.g. a front view camera). Also, camera system 10 could be used inside the compartment for applications like Occupant Sensing and Intrusion, Driver State Monitor, Gesture Control Camera and the like.

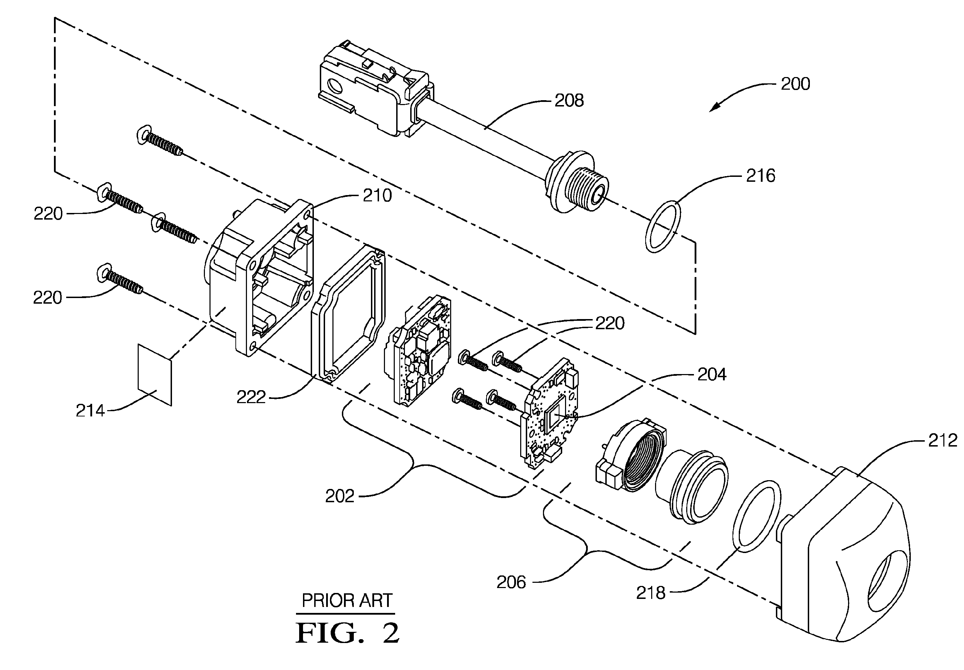

Fig. 2 illustrates an exploded view of a known camera 200. Some of the parts may be generally characterized as required parts of an exemplary camera. In this example, the required parts include: a circuit board assembly 202 illustrated here as the combination of two printed circuit boards (PCB-1, PCB-2) with an imager device 204, a lens assembly 206 illustrated here as the combination of a lens module and a lens holder, and a harness or pigtail connector 208. The rest of the parts may be generally characterized as optional parts of an exemplary camera, the presence of which serve to protect and/or hold together the required parts listed above. In this example, the optional parts include: a rear housing 210, a front housing 212, a vent seal 214, a harness seal 216, a lens seal 218, a collection of screws 220, and a gasket 222. As will become apparent in the description that follows, the final total cost of a camera suitable for use on a vehicle can be decreased due to the elimination of those optional parts and their associated production steps, and the overall reliability of the camera can be increased using the improvements described herein with regard to a molded camera.

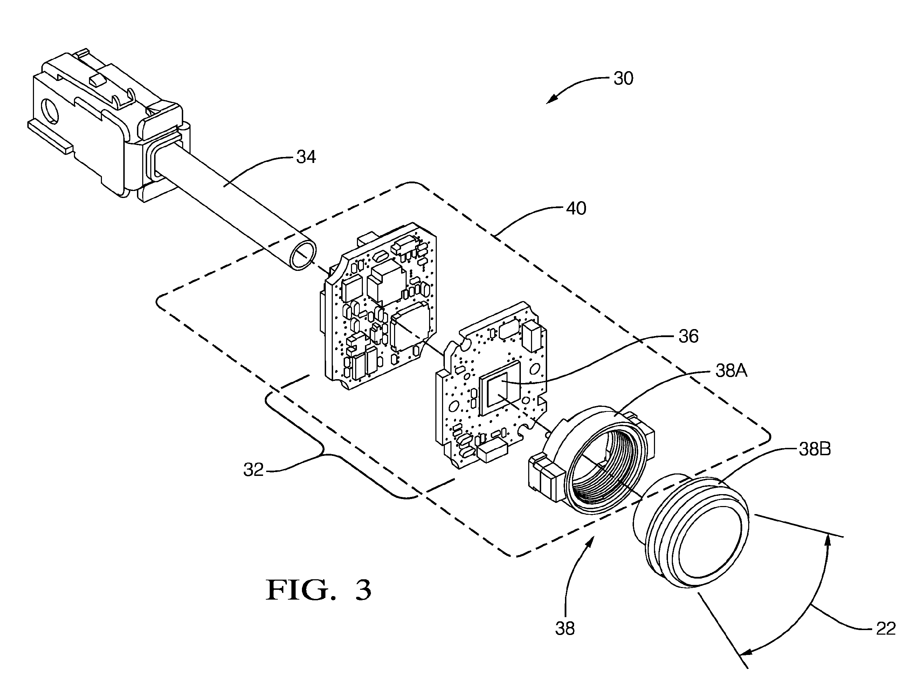

Fig. 3 illustrates a non-limiting example of a molded camera 30 suitable for use as the rearview camera 16 on the vehicle 12 to capture an image of a field-of-view 22 about the vehicle 12. Similar to the known camera 200 described above, the molded camera 30 includes a circuit board assembly 32. While the circuit board assembly 32 shown in this example has two distinct printed circuit boards (PCB-1, PCB-2), this is only to provide a desired form factor (i.e. shape) for the molded camera 30. If another form factor was desired, it may be that all of the electrical components that make up the circuit board assembly 32 could reside on a single printed circuit board such as a Rigid-Flex substrate.

The molded camera 30 also includes a wiring harness or pigtail connector 34 electrically and physically attached to the circuit board assembly 32. While the pigtail connector 34 illustrated includes a connector, unterminated wires are contemplated if a customer desired unterminated wires. Furthermore, a header type connector attached to the circuit board assembly 32 with exposed terminals accessible from outside the body of the molded camera is also contemplated.

The molded camera 30 also includes an imager device 36 attached to the circuit board assembly 32. The imager device 36 may be a commercially available charge coupled device (CCD) or a complementary metal oxide semiconductor (CMOS) type device capable of capturing an image projected onto the exposed surface of the imager device 36, as will be recognized by those in the art. The molded camera 30 also includes a lens assembly 38 that in this example includes a lens holder 38A and a lens module 38B. The lens holder 38A and the lens module 38B cooperate to focus the image of the field-of-view 22 about the vehicle 12 onto the imager device 36.

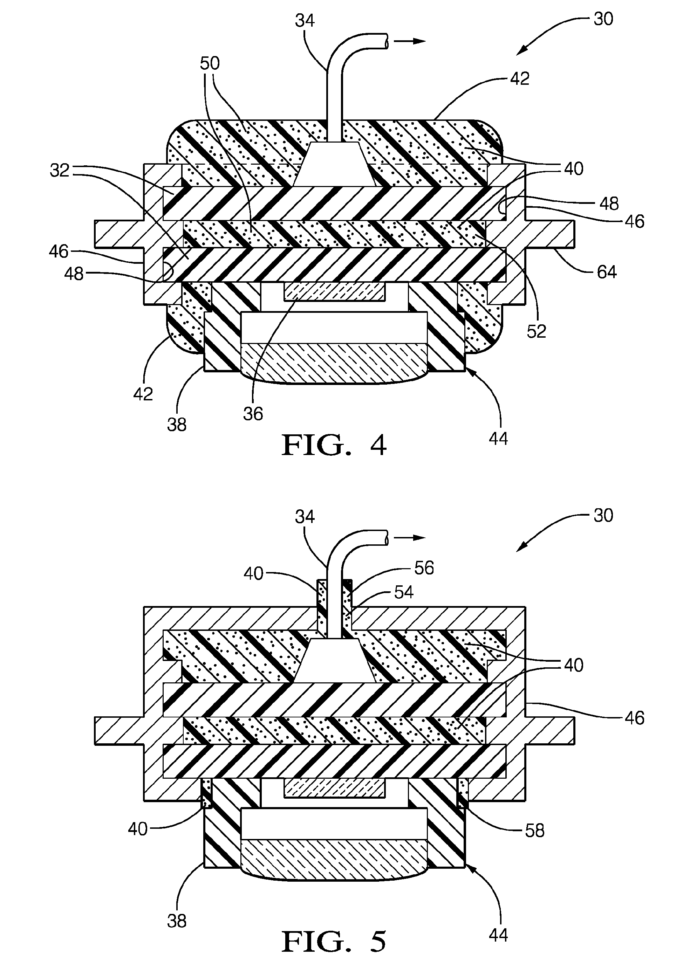

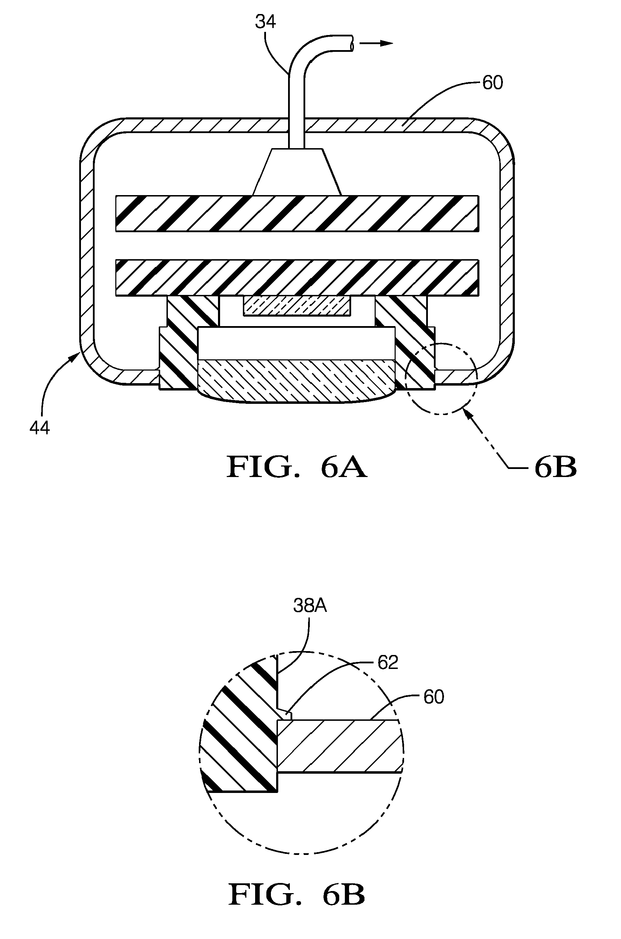

The improvement to the art of making a camera described herein as the molded camera 30 is the use of a polymeric compound 40 to hold together and/or encapsulate the various parts described above. The polymeric compound 40 is generally located within the dashed line illustrated and is configured to encapsulate the circuit board assembly 32 and other parts illustrated. The polymeric compound 40 is also used in variable amounts to define an external portion 42 (Fig. 4) of an exterior surface 44 of the molded camera 30, as will be described in more detail below. As will also be describe in more detail below, the application of the polymeric compound 40 is generally by way of a molding process where various parts are loaded into a mold tool, hereafter referred to as the mold 60 (Fig. 6A). Preferably, a molding process that is commonly called Low Pressure Molding (LPM) is used. LPM uses a polyamide or polyolefin (hotmelt) material or other plastics as the polymeric compound 40 to encapsulate and environmentally protect the components within the molded camera 30. The molded camera 30 also uses LPM to determine or define, at least in part, the exterior surface 44 of the molded camera.

Fig. 4 illustrates a non-limiting example of a molded camera 30 that includes a holder 46 that defines a slot 48 configured to receive and hold the circuit board assembly 32. The sectional view only shows two portions of the holder 46, but a U-shaped holder is contemplated to further support the circuit board assembly 32 and other parts of the molded camera 30. The holder 46 may also include features to help position and/or support other parts of the molded camera 30 such as the pigtail connector 34 and/or the lens assembly 38. The holder 46 may also include tabs 64 for attaching the molded camera 30 to the vehicle 12.

The holder 46 is preferably formed of a relatively more rigid material such as aluminum or 30% glass filled polybutylene terephthalate (PBT), compared to the polymeric compound. The holder 46 may also define a cavity 50 configured to contain an internal portion 52 of the polymeric compound 40. The internal portion 52 may serve to hold one component in a fixed relative position to another component, and/or serve as a barrier to undesirable contamination, such as water / humidity, and/or dust commonly found in an automotive environment and/or physical impact.

Fig. 5 illustrates a non-limiting example of a molded camera 30 where the polymeric compound 40 is formed in a manner effective to form a connector seal 54, protecting the connector from environmental humidity / water and dust intrusion, around the pigtail connector 34 between the pigtail connector 34 and the holder 46. While in this example the holder 46 defines or determines a majority of the exterior surface 44, the polymeric compound 40 still defines a small portion of the exterior surface 44.

The polymeric compound 40 may also be formed such that the polymeric compound 40 extends from the holder 46 (i.e. the connector seal 54 extends) a manner effective to form a support 56 for the pigtail connector 34. The support 56 is useful to provide stress reload for the pigtail connector 34 so wires within the pigtail connector are not prematurely fatigued to the point of fracture. By forming the support 56 using the polymeric compound 40, instead of providing a separate part that provides stress relief, the cost of the molded camera 30 is reduced.

The polymeric compound 40 may also be formed in a manner effective to form a lens seal 58 around the lens assembly 38 between the lens assembly 38 and the holder 46, protecting the lens from humidity / water and dust intrusion. As will be described in more detail below, the portions of the connector seal 54, the support 56, and the lens seal 58 that contribute to defining the exterior surface 44 of the molded camera are generally determined by the configuration of a mold 60.

Fig. 6A illustrates a non-limiting example of the mold 60 where the circuit board assembly 32 and the lens assembly 38 are installed into the mold 60 prior to injection of the polymeric compound 40. The molded camera 30 is formed when the polymeric compound 40 is injected into the mold 60. It should be understood that a similar mold is used to form the molded camera 30 shown in Figs 3, 4, and 5, but that the shape of the mold used may vary to provide the various features illustrated in those drawings. The mold 60 may be a two-piece mold that defines the entire exterior surface 44 that is determined by the polymeric compound 40 when it is injected into the mold 60. Alternatively, the mold 60 may by an open-top type mold where the top surface (viewed from the direction above the page of the illustration) is determined or defined when the polymeric compound 40 self-levels in the mold 60. That is, the top surface of the molded camera 30 is not determined by an inner surface of the mold 60.

Fig. 6B illustrates a non-limiting example of a detail of the lens holder 38 which also provides the feature / function of a mold stop 62. The mold stop is configured to cooperate with the mold 60 to prevent leakage while the polymeric compound 40 is injected into the mold 60. It is contemplated that the holder 46 (Figs. 4 and 5) may also be configured to define a some detail similar to the mold-stop 62 for the same purpose of preventing leakage while the polymeric compound 40 is injected into the mold 60.

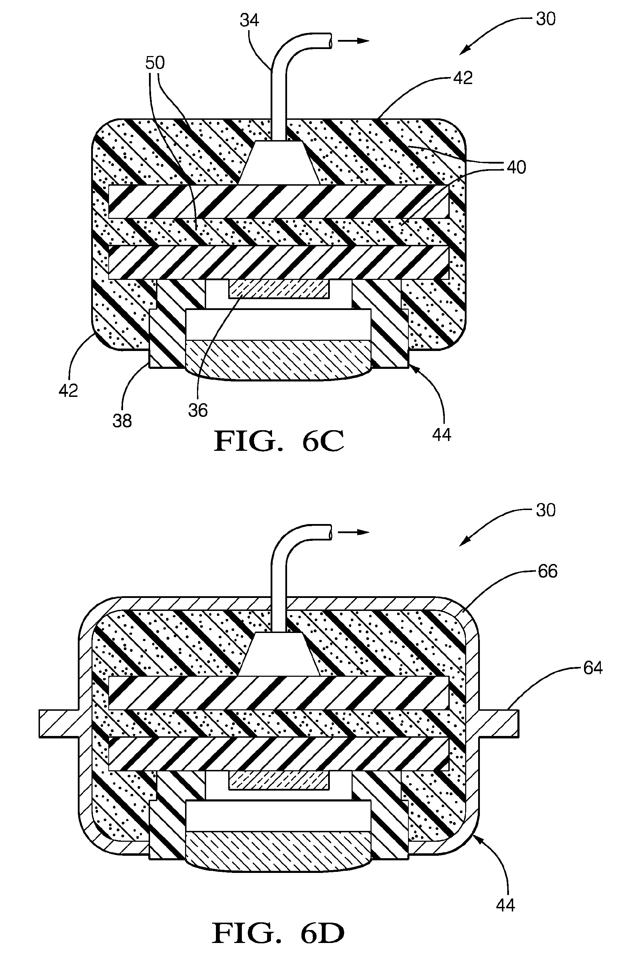

Fig. 6C illustrates a non-limiting example of the molded camera 30 after being removed from the mold 60 and after the polymeric compound 40 has hardened while within the mold 60. In this example, the exterior surface 44 is defined predominately by the polymeric compound 40, but some is defined by the lens assembly 38. In some applications the molded camera 30 illustrated in Fig. 6C may be installed onto the vehicle 12. However, in some instances the polymeric compound 40 may be deemed too soft for the intended application, so a housing or protective shell may be provided into which the molded camera 30 as shown is installed.

Fig. 6D illustrates a non-limiting example of an alternative configuration where the molded camera 30 is over-molded with a ridged material 66 after the polymeric compound 40 is injected into the mold 60. This secondary molding operation may be useful to adapt the molded camera 30 shown in Fig. 6C to a variety of applications, such as different camera fixation and mounting into the vehicles, which require distinct configurations of the tabs 64. That is, a variety of configurations of the tabs 64 can be applied to the same version of the molded camera 30.

Accordingly, a molded camera 30 suitable for use on a vehicle 12 to capture an image of a field-of-view 22 about the vehicle 12 is provided. Molding, preferably Low pressure molding (LPM), is used to encapsulate and protect the circuit board assembly 32 with the imager device 36 from humidity, water, dust exposure, and chemical contamination. Simultaneously, the LPM process defines portions, in some instances substantial portions of the exterior surface 44 of the molded camera. This reduces the cost to manufacture the molded camera 30 as compared to prior examples of cameras that used separate parts for housings and seals at several different locations to protect the circuit board assembly 32 from stringent automotive atmosphere.

While this invention has been described in terms of the preferred embodiments thereof, it is not intended to be so limited, but rather only to the extent set forth in the claims that follow.

## Claims

1. A molded camera (30) suitable for use on a vehicle (12) to capture an image of a field-of-view (22) about the vehicle (12), said molded camera (30) comprising:
a circuit board assembly (32);
a pigtail connector (34) attached to the circuit board assembly (32);
an imager device (36) attached to the circuit board assembly (32);
a lens assembly (38) configured to focus the image of the field-of-view (22) about the vehicle (12) on the imager device (36); and
a polymeric compound (40) configured to encapsulate the circuit board assembly (32) and define an external portion (42) of an exterior surface (44) of the molded camera (30).

2. The molded camera (30) in accordance with claim 1, wherein the molded camera (30) includes a holder (46) that defines a slot (48) configured to receive the circuit board assembly (32).

3. The molded camera (30) in accordance with claim 1 or 2, wherein the molded camera (30) includes a holder (46) that defines a cavity (50) configured to contain an internal portion (52) of the polymeric compound (40).

4. The molded camera (30) in accordance with any one of claims 1 to 3, wherein the molded camera (30) is formed when the circuit board assembly (32) and the lens assembly (38) are installed into a mold (60), and the polymeric compound (40) is injected into the mold (60).

5. The molded camera (30) in accordance with claim 4, wherein the holder (46) defines a mold-stop (62) configured to cooperate with the mold (60) to prevent leakage while the polymeric compound (40) is injected into the mold (60).

6. The molded camera (30) in accordance with claim 5, wherein the molded camera (30) is over-molded with a ridged material (66) after the polymeric compound (40) is injected into the mold (60) to adapt the molded camera (30) for different applications.

7. The molded camera (30) in accordance with any one of claims 1 to 6, wherein the polymeric compound (40) is formed in a manner effective to form a connector seal (54) around the pigtail connector (34).

8. The molded camera (30) in accordance with any one of claims 1 to 7, wherein the polymeric compound (40) extends a manner effective to form a support (56) for the pigtail connector (34).

9. The molded camera (30) in accordance with any one of claims 1 to 8, wherein the polymeric compound (40) is formed in a manner effective to form a lens seal (58) around the lens assembly (38).
